# EUROPEAN PATENT SPECIFICATION

(11) **EP 0 554 821 B1**
(45) Date of publication and mention of the grant of the patent: **20.05.1998**
(21) Application number: 93101527.5
(22) Date of filing: 01.02.1993
(51) Int. Cl.: G06K 7/06, H01R 23/70

(54) **Smart card connector**
Chipkartenverbinder
Connecteur pour carte à puce

(30) Priority: 04.02.1992 GB 9202313
(43) Date of publication of application: 11.08.1993
(73) Proprietor: THE WHITAKER CORPORATION, Wilmington, Delaware 19808 (US)
(72) Inventor: Grella, Georg, W-6100 Darmstadt-Wixhausen (DE); Fieberling, Bernd, W-6520 Worms 14 (DE)
(74) Representative: Klunker . Schmitt-Nilson . Hirsch

(56) References cited:
- EP-A- 0 399 763
- EP-A- 0 468 828
- EP-A- 0 482 548

## Description

The subject invention relates to an electrical connector for mounting to a printed circuit board according to the preamble of claim 1. The connector can receive a memory card; more particularly, it is related to a zero insertion force connector such that the insertion of the card results in connection between the connector and the memory card. A connector of the above type is known from EP-A-0,399,763.

It is quite common for various security systems to include memory cards, or so-called "smart cards" for interconnection to an associated connector. This memory card has active devices mounted on the circuit card which are interconnected to electrical traces on the printed circuit card. The circuits generally carry an access code on the circuit card. The cards are then inserted into the system, which may be a car radio or telephone, or which may be an access panel which will unlock the door to a secured area within a building.

One of the requirements of such a system is that the circuit traces are not in contact with their associated contacts until the card is substantially inserted in the card reader. As these cards are used repetitively, the circuit traces cannot be wiped through such a multitude of cycles, and still remain on the card. For this reason, it is desirable to have a connection system having a ZIF or zero-insertion force design.

According to EP-A-0,399,763 the electrical contact terminals extend from the pivoting member, and when the pivoting member is engaged by the leading edge of an inserted smart card, the pivoting member as well as the terminals are pivoted such that the tenninals touch the traces on the substrate.

The object of the invention is to provide an electrical connector which can be installed on a printed circuit board, where the insertion of the substrate (card) activates the contacts into a contacting relationship with the conductive traces on the substrate (card).

Another object of the invention is to provide the connection system mentioned above, which is easy to manufacture and is yet reliable.

These and other objects have been accomplished by providing an electrical connector for mounting to a printed circuit board having the features of claim 1.

Further embodiments are defined in the dependent claims the disclosure of which is incorporated into this description by way of this reference thereto.

The invention will now be described by way of reference to the drawing figures where;
Figure 1 is an upper plan view of the subject electrical connector;
Figure 2 is a cross sectional view through lines 2 - 2 shown in Figure 1;
Figure 3 is a cross sectional view similar to that shown in Figure 2 showing the connector with a memory card in its fully inserted position;
Figure 4 a cross sectional view through lines 4 - 4 of Figure 3;
Figure 5 is an upper plan view of a printed circuit board to which the connector shown in Figure 1 is mounted;
Figure 6 is a diagrammatical view of the memory card for use with the present invention; and
Figure 7 is an alternate embodiment of the invention.

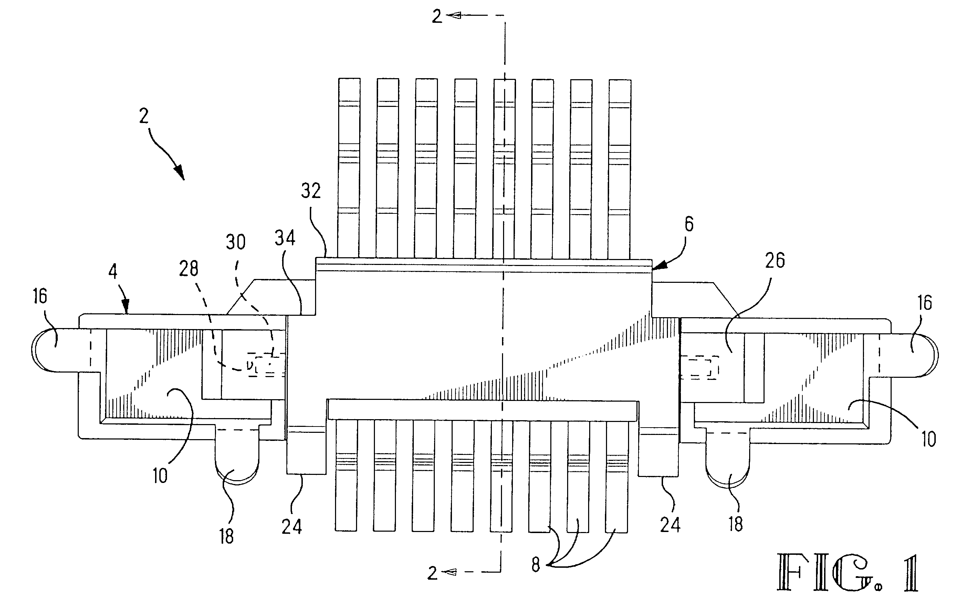

With reference first to Figure 1, an electrical connector is shown generally at 2 comprising a fixed housing portion 4, a rotatable housing portion 6 pivotally connected to the housing portion 4, and a plurality of electrical terminals such as 8. As shown in Figures 1 and 4, the housing portion 4 includes mounting flanges 10 at each end, the flanges 10 including a lower mounting surface 12 for abutment against a printed circuit board such as 14 shown in Figure 4. Latches 16 extend from each end part of the flanges 10 and further include latches 18 extending from the rear side of the connector housing 4. As shown best in Figure 4, each of the latching arms 16 and 18 include engaging portions 20 for securing the connector 2 to the printed circuit board 14.

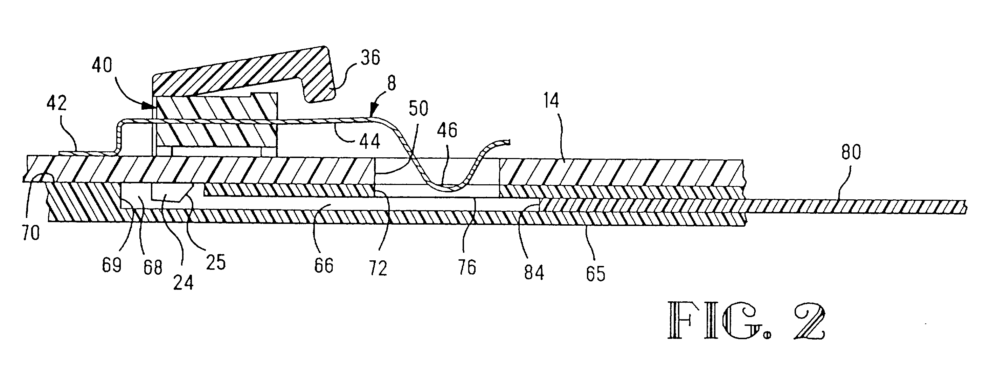

As shown in Figure 1, the rotatable housing 6 includes two camming legs 24 which span the contacts 8 and extend downwardly through the printed circuit board as best shown in Figure 2. The camming legs have forwardly facing camming edges 25. The housing 4 includes pivot blocks such as 26 having internal cylindrical openings 28 as shown in phantom in Figure 1, and the rotatable housing portions 6 includes pivot pins 30 positioned in the openings 28. The openings 28 and pivot pins 30 would be profiled for a close tolerance fit, the aperture 28 is shown larger than the pin 30 in Figure 1 for clarity only. As shown in Figure 1, an engaging section 32 extends forwardly from front edge 34 of the rotatable housing portion 6 and as shown in Figure 2 includes an engaging lip 36 which would be described in greater detail herein.

As shown in Figure 2, the connector includes a central body portion shown generally at 40 which houses the plurality of electrical terminals 8, and in the preferred embodiment of the invention, the terminals 8 are integrally molded within the central body portion 40. The terminals are stamped and formed to include a rear surface mount portion 42 and a forward cantilever beam portion 44 having a formed U-shaped contact portion 46.

As shown in Figure 5, the printed circuit board 14 includes a formed rectangular opening 50, two rectangular openings 52, mounting apertures 56 and 58, centering apertures 60, and a plurality of conductive traces such as 62.

With respect now to Figures 2 and 4, the assembly also includes a card receiving tray 65 which can be mounted to the lower surface of the printed circuit board 14. As shown in Figure 2, the tray 65 includes a card receiving guide 66 having a rear edge 67, and channels 68 which extend from an upper surface 70 of the tray and communicate with the guide 66. The tray 65 further includes an opening 72 which in the preferred embodiment, would have the same configuration as the rectangular opening 50 in the printed circuit board 14. The assembly of the connector 2, printed circuit board 14 and card receiving tray 65 will now be described in greater detail.

With a printed circuit board configured as shown in Figure 5, the tray 65 can be installed to the lower surface of the printed circuit board 14 such that the openings 72 and 50 are in alignment as shown in Figure 2, and such that the openings 52 through the printed circuit board overlay the channel 68 in card tray 65. It should be appreciated that location members such as pegs will be incorporated into the card tray 65 to locate the card tray relative to the printed circuit board. Also, although not specifically shown, the card tray 65 will include some means of being retained to lower surface of the printed circuit board 14.

The connector 2 can now be positioned on the top surface of the printed circuit board 14 with the surface mount portions 42 positioned over respective traces 62 and with the contact portions 46 positioned in the opening 50 of the printed circuit board and partially extending into the opening 72 of the card tray as shown in Figure 2. It should be appreciated that latching members 16 are profiled to latch within apertures 56 in the printed circuit board while latching members 18 are profiled for receipt within the apertures 58. Camming legs 24 extend downwardly through the rectangular openings 52 in the printed circuit board into the channel 68 of the card guide, such that the camming surfaces 25 of the camming legs 24 face forwardly towards the card receiving guide 66. As shown in the open position in Figure 2, the cantilever beam portions 44 of the terminals 8 are sprung upwardly somewhat, such that the contact surfaces of the U-shaped contact portions 46 are above the upper surface 76 of the card receiving guide 66.

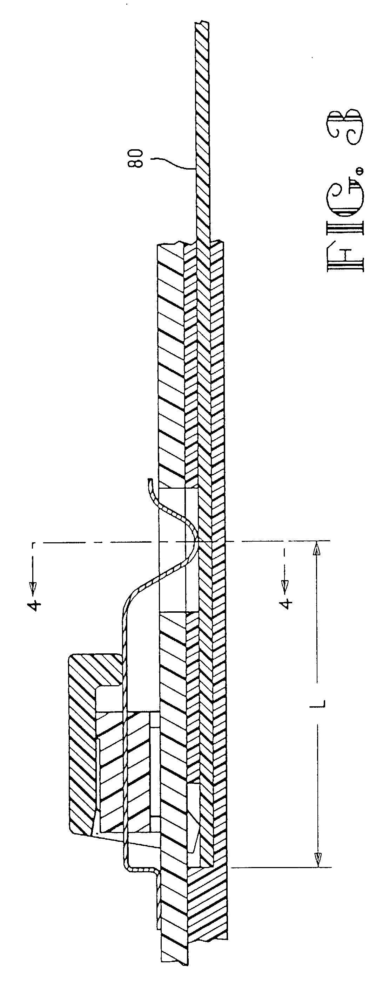

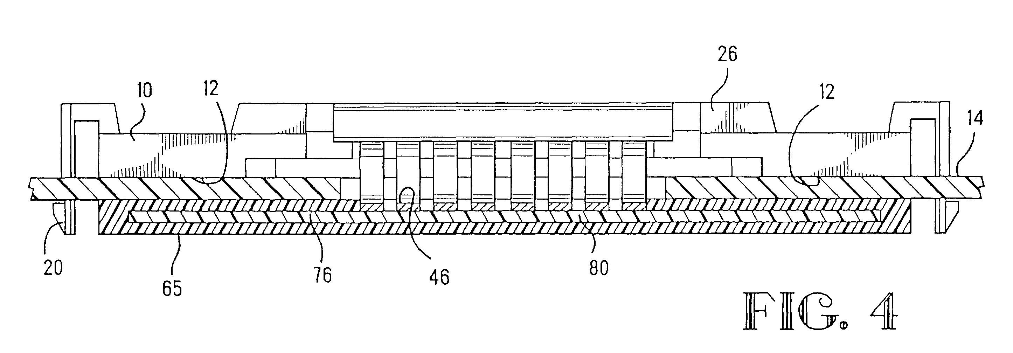

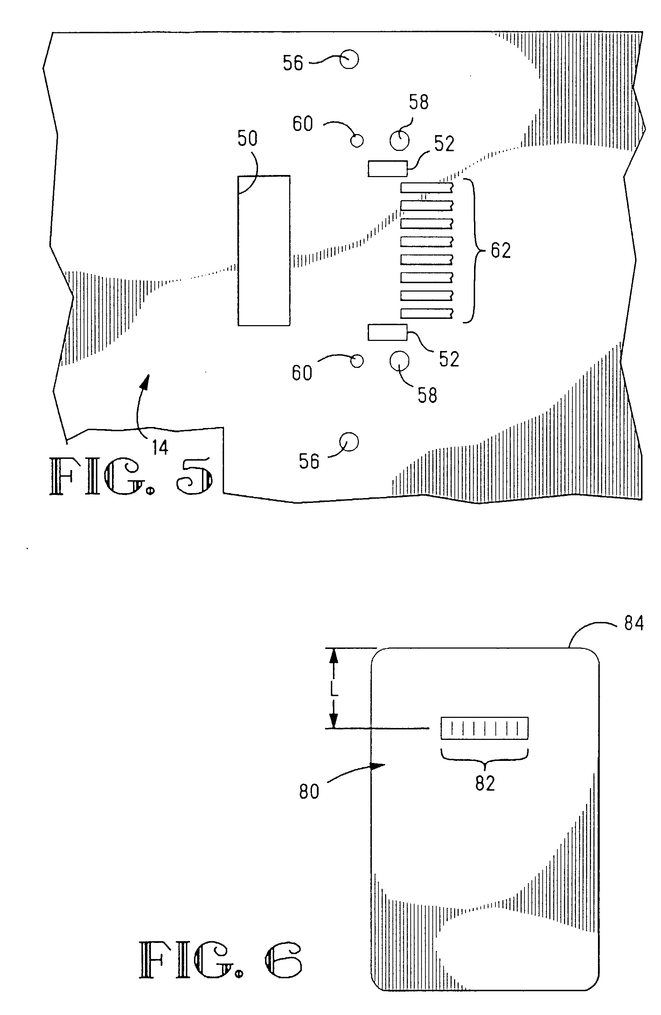

As shown in Figure 6, a memory card or so-called smart card is shown generally at 80 and includes a plurality of electrical traces 82. It should be appreciated then that the card 80 can be inserted as shown in Figure 2 where the card is received in the card receiving guide 66 and can be pushed forward toward the camming legs 24. With the connector in the position shown in Figure 2, the card will pass beneath contact portions 46 without contacting them. Continued insertion of the memory card 80 causes the leading edge 84 to engage surfaces 25 and pivot the rotating housing member 6 in the clockwise sense, as viewed in Figure 2. This rotation causes the lip portion 36 to engage the cantilever beam portions 44 of the terminals 8, thereby forcing the contact portions 46 against the electrical traces 82 on the memory card 80. It should be appreciated that the distance L as shown in Figure 3, which corresponds to the distance from the back surface 69 of the channel 68 to the center of the contact portions 46, also corresponds to the distance L shown Figure 6, that is the distance between the leading edge 84 and the center of the traces 82.

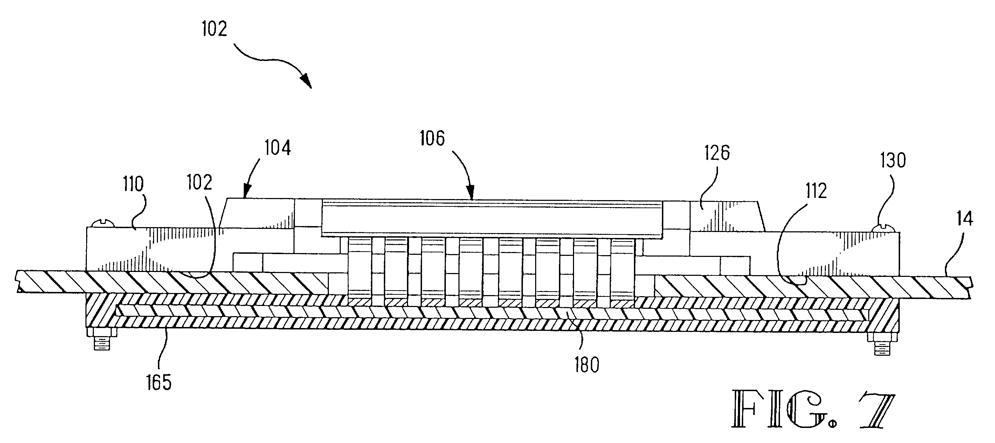

Figure 7 shows an alternate embodiment of the connector of Figures 1-6, where the connector 102 has a housing portion 104 and a rotatable housing portion 106. A tray portion 165 is positioned below the board similarly to the former embodiment. In the embodiment of Figure 7, the latches 16, 18 of the previous embodiment are removed, and the housing 104 and the tray portion 165 are held together, with the board 14 sandwiched in between by way of fasteners such as screws 130.

It should also be understood that alternative embodiments are possible. For example, one could put the tray 65 directly below the fixed housing position, such that the contact 46 comes directly against the trace 82 through the opening 72, rather than through the opening 50 of the board 14. Also the connector as shown, has all of the contact 8 positioned in a common plane, where all of the contact points 46 are equidistant from the lip portion 36. It is also possible to stack the terminals 8 one on top of the other, but insulatively separated, such that the contacts 46, will contact two rows of traces 82, one row axially offset from the ohter. This would require modification to the lip portion 36 however, in that it would have to simultaneously contact two rows of stacked cantilever portions 44.

## Claims

1. An electrical connector (2) for mounting to a printed circuit board (14), which carries a plurality of electrical circuit traces (62) thereon, said electrical connector (2) comprising:
- means (42) for electrical connection to said traces (62),
- means (65) for connection to circuit traces (82) on a substrate (80), e.g., a memory card, which is to be connected to said circuit board (14), said substrate connection means (65) comprising a substrate receiving slot (66) profiled for receiving said substrate (80) therein,
- a fixed housing portion (4) carrying a plurality of electrical tenninals (8) extending therefrom,
- a pivoting member (6), pivoting relative to said fixed housing portion (4) and adapted to move said terminals (8) into engagement with the circuit traces (82) on the substrate (80),
characterized in that said terminals (8) are defined as cantilever beam portions (44) extending from said fixed housing portion (4) and having contact portions (46), and said pivoting member (6) has a lip portion (36) extending towards said cantilever beam portions (44), where upon rotation of said pivoting member (6), by insertion of said substrate card (80), said lip portion (36) comes into contact with said cantilever beam portions (44), thereby forcing said contact portions (46) into engagement with said substrate card (80).

2. The connector of claim 1, characterized in that said substrate connecting means (65) including said substrate receiving slot (66) is positioned below said fixed housing portion (4), so that the board will be sandwiched between said fixed housing portion (4) and said substrate connection means (65).

3. The connector (2) of either of claims 1 and 2, characterized in that said substrate connection means is in the form of a tray (65) fixed below the fixed housing portion (4).

4. The connector (2) of claim 3 mounted to a circuit board (14), characterized in that the contact portions (46) of said terminals (8) extend through an opening (50) through said board (14) and into said substrate receiving slot (66).

5. The connector (2) of any of claims 1-4, characterized in that said terminals (8) are disposed in a common plane, and are positioned side-by-side.

6. The connector of any of claims 1 to 3 or 5 mounted to a circuit board, characterized in that said substrate connection means is in the fonn of a tray (65) fixed above the printed circuit board (14), with the connector (2) positioned above the tray (65).

7. The connector of any of claims 1-4, characterized in that said tenninals (8) are fixed in said fixed housing portion (4) in two planes.

8. The connector of claim 7, characterized in that said cantilever beam portions are stacked one above the other, to circuit traces (82) on the substrate (80) in two axially offset rows.

9. The connector of any of the previous claims, characterized in that said connector (2) further comprises camming members (24,25) positioned in said substrate receiving slot (66), whereby, when said substrate (80) is inserted in said slot (66), said pivoting member (6) is rotated to cause said terminals (8) to become engaged with said substrate (80).

## Patentansprüche

1. Elektrischer Verbinder (2) für das Montieren auf eine Leiterplatte (14), die eine Vielzahl von elektrischen Leiterbahnen (62) darauf trägt, wobei der elektrische Verbinder (2) aufweist:
eine Einrichtung (42) für die elektrische Verbindung mit den Leiterbahnen (62);
eine Einrichtung (65) für das Verbinden mit den Leiterbahnen (82) auf einem Trägermaterial (80), beispielsweise einer Speicherkarte, das mit der Leiterplatte (14) verbunden werden soll, wobei die Einrichtung (65) für die Verbindung mit dem Trägermaterial einen Trägeraufnahmeschlitz (66) aufweist, der so gestaltet ist, daß er darin das Trägermaterial (80) aufnimmt;
einen stationären Gehäuseabschnitt (4), der eine Vielzahl von elektrischen Anschlußklemmen (8) trägt, die sich daraus erstrecken;
ein drehbares Element (6), das relativ zum stationären Gehäuseabschnitt (4) drehbar und so ausgeführt ist, daß die Anschlußklemmen (8) mit den Leiterbahnen (82) auf dem Trägermaterial (80) in Eingriff gebracht werden;
dadurch gekennzeichnet, daß die Anschlußklemmen (8) als Kragträgerabschnitte (44) definiert sind, die sich aus dem stationären Gehäuseabschnitt (4) erstrecken und die Kontaktabschnitte (46) aufweisen, und daß das drehbare Element (6) einen Randabschnitt (36) aufweist, der sich in Richtung der Kragträgerabschnitte (44) erstreckt, wobei bei der Drehung des drehbaren Elementes (6) durch Einsetzen der Trägerkarte (80) der Randabschnitt (36) mit den Kragträgerabschnitten (44) in Kontakt kommt, wodurch die Kontaktabschnitte (46) mit der Trägerkarte (80) in Eingriff gebracht werden.

2. Verbinder nach Anspruch 1, dadurch gekennzeichnet, daß die Einrichtung (65) für die Verbindung mit dem Trägermaterial, die den Trägeraufnahmeschlitz (66) umfaßt, unterhalb des stationären Gehäuseabschnittes (4) angeordnet ist, so daß die Leiterplatte zwischen dem stationären Gehäuseabschnitt (4) und der Einrichtung (65) für die Verbindung mit dem Trägermaterial angeordnet wird.

3. Verbinder (2) nach Anspruch 1 oder 2, dadurch gekennzeichnet, daß die Einrichtung für die Verbindung mit dem Trägermaterial in der Form eines Aufnahmebehälters (65) vorliegt, der unterhalb des stationären Gehäuseabschnittes (4) befestigt ist.

4. Verbinder (2) nach Anspruch 3, der auf einer Leiterplatte (14) montiert ist, dadurch gekennzeichnet, daß sich die Kontaktabschnitte (46) der Anschlußklemmen (8) durch eine Öffnung (50) durch die Leiterplatte (14) und in den Trägeraufnahmeschlitz (66) hinein erstrecken.

5. Verbinder (2) nach einem der Ansprüche 1 bis 4, dadurch gekennzeichnet, daß die Anschlußklemmen (8) in einer gemeinsamen Ebene und nebeneinander angeordnet sind.

6. Verbinder nach einem der Ansprüche 1 bis 3 oder 5, der auf einer Leiterplatte montiert ist, dadurch gekennzeichnet, daß die Einrichtung für die Verbindung mit dem Trägermaterial in der Form eines Aufnahmebehälters (65) vorliegt, der über der Leiterplatte (14) befestigt ist, wobei der Verbinder (2) oberhalb des Aufnahmebehälters (65) angeordnet ist.

7. Verbinder nach einem der Ansprüche 1 bis 4, dadurch gekennzeichnet, daß die Anschlußklemmen (8) im stationären Gehäuseabschnitt (4) in zwei Ebenen befestigt sind.

8. Verbinder nach Anspruch 7, dadurch gekennzeichnet, daß die Kragträgerabschnitte übereinander auf den Leiterbahnen (82) auf dem Trägermaterial (80) in zwei axial versetzten Reihen gestapelt sind.

9. Verbinder nach einem der vorhergehenden Ansprüche, dadurch gekennzeichnet, daß der Verbinder (2) außerdem Nockenelemente (24, 25) aufweist, die im Trägeraufnahmeschlitz (66) angeordnet sind, wodurch, wenn das Trägermaterial (80) in den Schlitz (66) eingesetzt wird, das drehbare Element (6) gedreht wird, um zu bewirken, daß die Anschlußklemmen (8) mit dem Trägermaterial (80) in Eingriff gebracht werden.

## Revendications

1. Connecteur électrique (2) destiné à être monté sur une plaquette de circuit imprimée (14), comportant plusieurs lignes de circuit électriques (62), ledit connecteur électrique (2) comprenant:
un moyen (42) destiné à être connecté électriquement auxdites lignes (62),
un moyen (65) destiné à être connecté aux lignes de circuit (82) sur un substrat (80), par exemple une carte à mémoire, devant être connectée à ladite plaquette de circuit (14), ledit moyen de connexion au substrat (65) comprenant une fente de réception du substrat (66), profilée de sorte à recevoir ledit substrat (80);
une partie de boîtier fixe (4), comportant plusieurs bornes électriques (8), s'étendant à partir de celle-ci,
un élément de pivotement (6), pivotant par rapport à ladite partie de boîtier fixe (4) et destiné à déplacer lesdites bornes (8) en vue de leur engagement dans les lignes de circuit (82) sur le substrat (80),
caractérisé en ce que lesdites bornes (8) sont définies sous forme de parties de barre en porte-à-faux (44), s'étendant à partir de ladite partie de boîtier fixe (4), et comportent des parties de contact (46), ledit élément de pivotement (6) comportant une partie de rebord (36), s'étendant vers lesdites parties de barre en porte-à-faux (44), ladite partie de rebord (36) entrant en contact avec lesdites parties de barre en porte-à-faux (44) lors de la rotation dudit élément de pivotement (6), par suite de l'insertion de ladite carte de substrat (80), entraînant ainsi l'engagement desdites parties de contact (46) avec ladite carte de substrat (80).

2. Connecteur selon la revendication 1, caractérisé en ce que ledit moyen de connexion au substrat (65) englobant ladite fente de réception du substrat (66), est agencé au-dessous de ladite partie de boîtier fixe (4), de sorte que la plaquette sera prise en sandwich entre ladite partie de boîtier fixe (4) et ledit moyen de connexion au substrat (65).

3. Connecteur (2) selon l'une quelconque des revendications 1 et 2, caractérisé en ce que ledit moyen de connexion au substrat a la forme d'un plateau (65), fixé au-dessous de la partie de boîtier fixe (4).

4. Connecteur (2) selon la revendication 3, monté sur une plaquette de circuit (14), caractérisé en ce que les parties de contact (46) desdites bornes (8) s'étendent à travers une ouverture (50), traversent ladite plaquette (14) et rentrent dans ladite fente de réception du substrat (66).

5. Connecteur (2) selon l'une quelconque des revendications 1 à 4, caractérisé en ce que lesdites bornes (8) sont agencées dans un plan commun et sont positionnées côte à côte.

6. Connecteur (2) selon l'une quelconque des revendications 1 à 3 ou 5, monté sur une plaquette de circuit, caractérisé en ce que ledit moyen de connexion au substrat a la forme d'un plateau (65), fixé au-dessus de la plaquette de circuit imprimée (14), le connecteur (2) étant agencé au-dessus du plateau (65).

7. Connecteur selon l'une quelconque des revendications 1 à 4, caractérisé en ce que lesdites bornes (8) sont fixées dans ladite partie de boîtier fixe (4) dans deux plans.

8. Connecteur selon la revendication 7, caractérisé en ce que lesdites parties de barre en porte-à-faux sont empilées l'une au-dessus de l'autre, sur les lignes de circuit (82) sur le substrat (80), dans deux rangées décalées axialement.

9. Connecteur selon l'une quelconque des revendications précédentes, caractérisé en ce que ledit connecteur (2) comprend en outre des éléments de came (24, 25), agencés dans ladite fente de réception du substrat (66), ledit élément de pivotement (6) étant ainsi mis en rotation lors de l'insertion dudit substrat (80) dans ladite fente (66), entraînant l'engagement desdites bornes (8) avec ledit substrat (80).
